# EUROPEAN PATENT APPLICATION

(11) **EP 1 491 388 A2**
(43) Date of publication of application: **29.12.2004**
(21) Application number: 04014646.6
(22) Date of filing: 23.06.2004
(51) Int. Cl.: B60N 2/02, B60N 2/22, B60N 2/30

(54) **Electrically foldable seat**

(30) Priority: 24.06.2003 JP 2003179628; 27.06.2003 JP 2003185599
(71) Applicant: Aisin Seiki Kabushiki Kaisha, Kariya-shi, Aichi-ken 448-8650 (JP)
(72) Inventor: Moriyama, Genta, c/o Int. Prop. Dep., Aisin Seiki, Kariya-shi, Aichi-ken 448-8650 (JP); Hoshihara, Naoaki, c/o Int. Prop. D., Aisin Seiki, Kariya-shi, Aichi-ken 448-8650 (JP); Nawa, Hiroshi, c/o Int. Prop. D., Aisin Seiki, Kariya-shi, Aichi-ken 448-8650 (JP)
(74) Representative: Pautex Schneider, Nicole

(57) **Abstract**

A seat apparatus (1) comprising a seat back (2) as a backrest portion, a seat cushion (3) as a seating portion, a link mechanism (4) for supporting the seat cushion on a vehicle floor, and a driving source (61) for actuating the link mechanism (4) to position the seat cushion (3) between a seating position and a stored position, **characterized in that** the link mechanism (4) is pivotally mounted on the vehicle floor for defining a posture thereof.

## Description

### FIELD OF THE INVENTION

The current invention relates to a vehicle seat apparatus. More particularly, the invention pertains to a structure whereby the vehicle seat apparatus can be stored within a concave storage compartment provided below the surface of a vehicle floor when the vehicle seat is unused.

### BACKGROUND OF THE INVENTION

A known art according to a seat apparatus having a structure whereby the seat apparatus can be stored within a concave storage compartment provided below a vehicle floor when the vehicle seat is unused is disclosed in Laid-open Japanese patent publication No. 11(1999)-048840. According to the known art, the vehicle seat apparatus includes a link mechanism for supporting a cushion as a seating portion of the seat on the vehicle floor. Such link mechanism limits the seat to be a retractable folded condition so that a user may move the seat within the concave storage compartment.

In the know art, the posture of the link mechanism is not determined until the seat apparatus is installed to the vehicle. Further, the seat apparatus needs to be fixed on the vehicle floor with bolts at a predetermined position to be moved freely. In this way, the structure of the known seat apparatus is very complicated.

### SUMMARY OF THE INVENTION

According to an aspect of the present invention, a seat apparatus comprising a seat back as a backrest portion, a seat cushion as a seating portion, a link mechanism for supporting the seat cushion on a vehicle floor, and a driving source for actuating the link mechanism to position the seat cushion between a seating position and a stored position, characterized in that the link mechanism is pivotally mounted on the vehicle floor for defining a posture thereof and fixing the link mechanism to the vehicle floor.

Furthermore, the link mechanism is maintained at a predetermined position by stopping the driving device at a predetermined position. Thus, the seat apparatus can be kept in a predetermined posture before installed on the vehicle floor. Such seat apparatus being the predetermined posture can be easily installed on the floor by fitting holes thereof to be screwed with bolts to a preferable installed position on the floor, which can simplify the installing operation.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig.1 illustrates a perspective side view of the seat apparatus according to the first embodiment of the current invention;
Fig.2 illustrates a perspective view of the seat apparatus according to the first embodiment of the current invention;
Fig.3 illustrates an partial enlarged diagram of the Fig.3;
Fig.4 illustrates a block diagram indicating a control device according to the current invention;
Fig.5 illustrates a perspective side view of the seat apparatus according to the second embodiment of the current invention;
Fig.6 illustrates a side view of a lock mechanism according to the second embodiment of the current invention;
Fig.7 illustrates a perspective side view of the seat apparatus according to the third embodiment of the current invention;
Fig.8 illustrates a perspective side view of the seat apparatus according to the fourth embodiment of the current invention;
Fig.9 illustrates a perspective side view of the seat apparatus according to the fifth embodiment of the current invention, and
Fig.10 illustrates a perspective side view of the seat apparatus according to the sixth embodiment of the current invention.

### DETAILED DESCRIPTION OF THE INVENTION

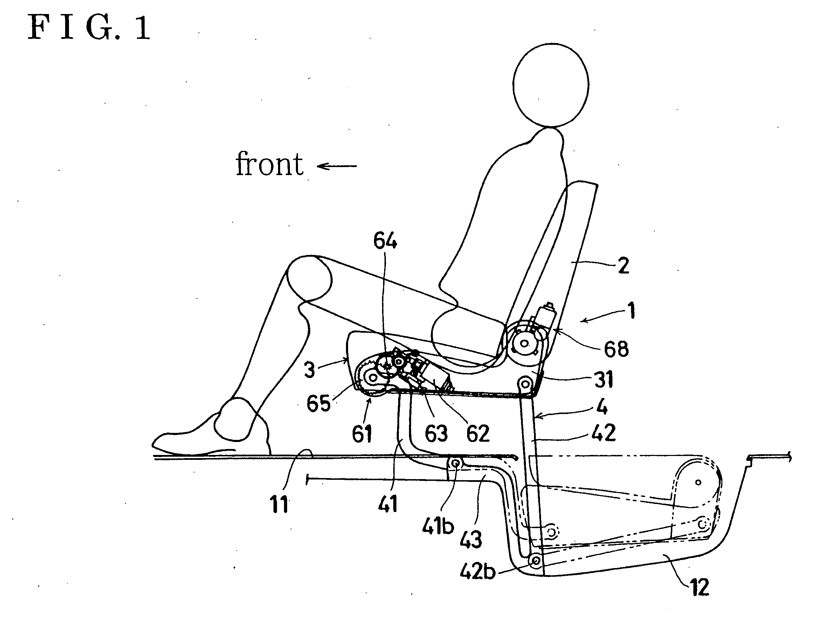

A preferred embodiment of a seat apparatus 1 according the current invention will be explained with reference to Fig. 1 through Fig.10. Fig. 1 through Fig.3 indicate a first embodiment according to the current invention. As shown in Fig.1, the seat apparatus 1 includes a seat back 2 and a seat cushion 3.

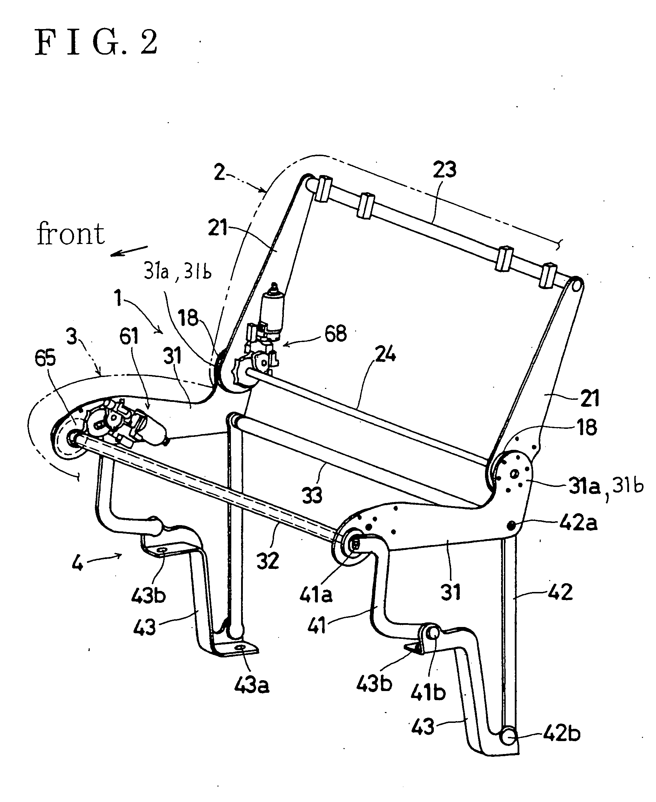

Furthermore, cushion side frames 31 are provided to the seat cushion 3 at both right and left sides thereof in vehicle width direction as shown in Fig.2. Both cushion side frames 31 horizontally extend toward the front of the vehicle (leftward in Fig.1 and Fig.2). A front end portion of the left cushion side frames 31 is connected to a front end portion of the right cushion side frames 31 with a hollowed front connecting pipe 32.

Each rear end portion of the cushion side frame 31 includes a projecting portion 31a extending upward, and a known angle adjustment mechanism 18 having a planetary gear mechanism 31b is attached to each projecting portion 31. The planetary gear mechanism provided to the right cushion side frame 31 interlocks with the planetary gear mechanism provided to the left cushion side frame 31. Back side frames 21 of the seat back 2 are attached to the angle adjustment mechanisms 18. Both angle adjusting mechanisms 18 are connected with an interlocking rod 24 for rotating in conjunction with each other. A second driving device 68 is attached to either one of the back side frames 21 for driving one angle adjustment mechanism 18. The second driving device 68 includes a motor and a decelerating mechanism, and such configuration is same as a first driving mechanism 61 (first driving source) as described later. The planetary gear mechanism of the angle adjusting mechanism 18 is actuated/rotated by a drive from the second driving device 68 (second driving source) for adjusting the angle of the seat back 2. The back side frames 21 provided on the right and left side of the seat back 2 in the vehicle width direction are connected with a upper connecting pipe 23 at the upper portions of the back side frames 21 for securing the strength thereof.

As shown in Fig.1 and Fig.2, the seat apparatus 1 includes link mechanisms 4 installed below the cushion side frames 31. The link mechanisms 4 include a paired front links 41 provided at the front of the seat apparatus 1 and a paired rear links 42 provided at the rear of the seat apparatus 1. Specifically, one front link 41 is attached to the right cushion side frame 31, and the other front link 41 is attached to the left cushion side frame 31. Both front links 41 are provided at the outer side of the cushion side frames 31 in the vehicle width direction and connected each other with a rotation shaft 41a extending and penetrating through the hollowed front connecting pipe 32 provided between the front portions of the cushion side frames 31 so that the links are interlocked.

On the other hand, one rear link 42 is attached to the right cushion side frame 31, and the other rear link 42 is attached to the left cushion side frame 31. Both rear links 42 are provided at the inner sides of the cushion side frames 31 in the vehicle width direction and connected with a rotation shaft 42a extending and penetrating through a hollowed rear connecting pipe 33 provided between the rear portions of the cushion side frames 31 so that the links are interlocked. Specifically, the rear links 42 are rotatably supported at the cushion side frames 31 by the rotation shaft 42a penetrating through the rear connecting pipe 33.

As shown in Fig.2, the rear links 42 extend approximately straight downward to be longer than the front links 41. Each front link 41 and each rear link 42 attached to the same cushion side frame 31 are connected with a supporting bracket 43 at the lower end of each link. Specifically, the front link 41 is rotatably attached to the supporting bracket 43 with a rotating shaft 41b, and the rear link 42 is rotatably attached to the supporting bracket 43 with a rotating shaft 42b. In this configuration, the front link 41 and the rear link 42 are rotated at the same time even if the seat apparatus 1 is not installed on the vehicle floor 11. The supporting bracket 43 is molded to fit the stepped portion of the vehicle floor 11 as described later and fixed to the vehicle floor 11 with bolts (not shown) screwed into a hole 43a and a hole 43b. Such supporting bracket 43 installed in this manner can also reinforce the vehicle floor 11. Specifically, the supporting bracket 43 can reduce a deformation of the vehicle floor 11 when an excessive load transmits from the seat apparatus 1 to the vehicle floor 11 upon a collision.

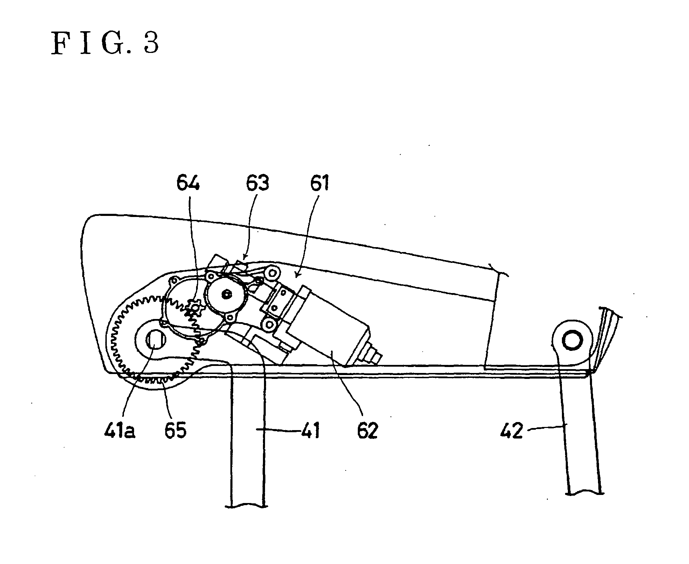

As shown in Fig.2 and Fig.3, the first driving mechanism 61 is mounted to one of either right or left cushion side frame 31 at the inner side thereof in the vehicle width direction. The first driving mechanism 61 includes a motor 62 and a deceleration mechanism 63 for rotating a pinion 64 extending outwardly and penetrating through a hole (not shown) formed on the cushion side frame 31. The pinion 64 meshes with a gear 65 fixed to the rotating shaft 41a at the outer side of the cushion side frame 31 at which the first driving mechanism is attached. In this configuration, a drive from the first driving mechanism 61 transmits through the pinion 64 and the gear 65 to the front link 41, so that the front link is actuated/rotated relative to the cushion side frame 31. In addition, the rotation and positioning of the front link 41 relative to the cushion side frame 31 can be limited when the first driving mechanism 61 is not actuated.

The link mechanism 4, which is pivotally mounted on the vehicle floor 11, has a so-called four link configuration, comprising the front link 41, the rear link 42, the cushion side frame 31 and the supporting bracket 43, and the link mechanisms 4 are provided at both right and left sides of the cushion side frame 31. The link mechanisms 4 provided both sides of the cushion side frame 31 are connected with the rotation shaft. As shown in Fig.1, the vehicle floor 11 includes a concave storage compartment 12 below the level of the vehicle floor 11 being normal height. The seat apparatus 1 is installed to the vehicle floor 11 as follows; the rear portion of the supporting bracket 43 at which the rear link 42 is supported by the rotation shaft 42b fits the bottom of the concave storage compartment 12, and the front portion of the supporting bracket 43 at which the front link 41 is supported by the rotation shaft 41b fits the surface of the vehicle floor 11. Thus, the front link 41 is rotated by the drive from the first driving mechanism 61 to be in a position shown in a chain double-dashed line in Fig.1 keeping the posture of the cushion side frame 31 approximately horizontally.

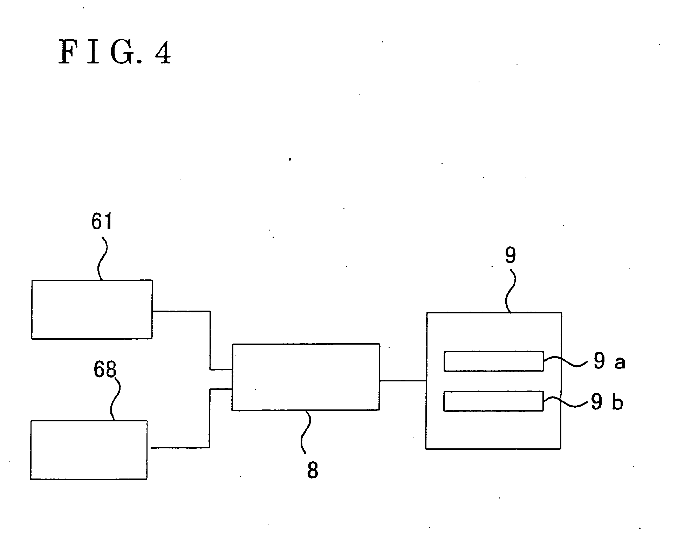

The aforementioned first driving mechanism 61 and the second driving mechanism 68 are controlled by a control device 8 and an operation switch 9. The control device 8 and the operation switch 9 are wired to the first driving mechanism 61 and the second driving mechanism 68 as shown in Fig.4. Thus, the first driving mechanism 61 and the second driving mechanism 68 are actuated by operating the operation switch 9.

Behavior of the seat apparatus 1 with the aforementioned configuration will be explained as follows. An angle adjusting switch 9a of the operation switch 9 is operated by an occupant to adjust the angle of the seat back 2 to be seating position. As the second driving mechanism 68 is actuated, the seat back 2 is tilted in front or rear direction, then the second driving mechanism 68 is stopped for maintaining the adjusted posture of the seat back 2.

To increase cargo capacity, a storing switch 9b is moved to, for example, a "storing" side for opening the place where the seat apparatus 1 is located in seating position. Then, the first driving mechanism 61 is actuated by the controlling device 8, and the seat apparatus 1 is moved to the concave storage compartment 12 by the drive from the first driving mechanism 61, at the same time, the seat back 2 is rotated to be folded upon the seat cushion 3 upon the operation of the control device 8. In this way, the seat apparatus 1 is stored within the concave storage compartment 12 as shown in the chain double-dashed line in Fig.1. On the other hand, the storing switch 9b is moved to, for example, a "restore" side to restore the seat apparatus 1 within the concave storage compartment 12 to the original seating position.

Thus, the seat apparatus 1 is kept in the predetermined posture because of the behavior of the link mechanism 4 while the seat apparatus 1 is moved between the seating position thereof and the stored position thereof so that the user can store the seat apparatus 1 within the concave storage compartment 12 or restore to the seating position without supporting the seat apparatus 1 manually. Such seat apparatus can be controlled even if the user is away from the seat apparatus 1. Further, there is no need to follow a complicated operational sequence to move the seat apparatus 1, as a result, the storing operation becomes simple and easy.

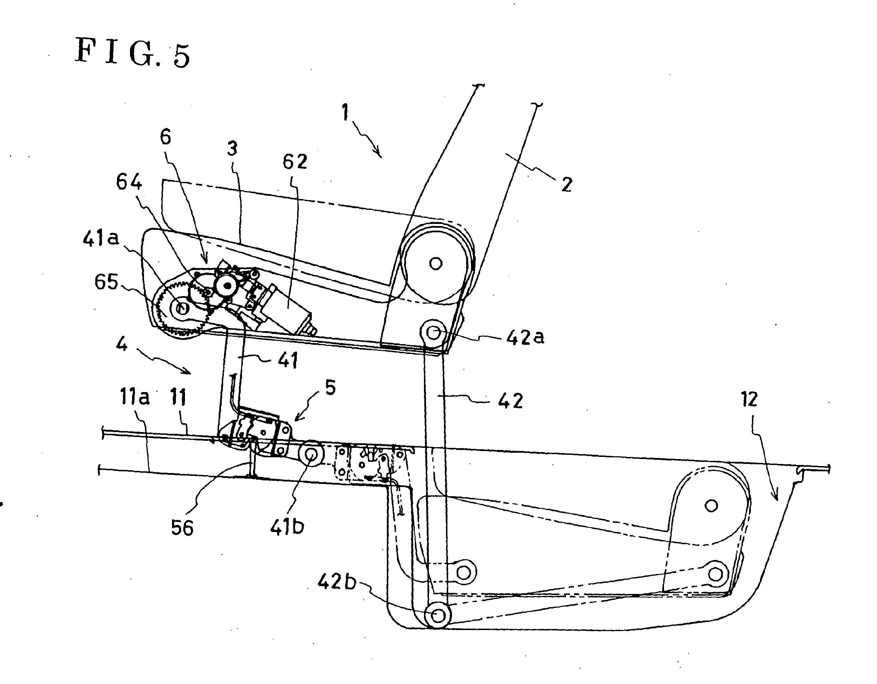

Fig. 5 indicates a second embodiment according to the current invention. The seat apparatus 1 includes the seat back 2 as the backrest portion for a passenger and the seat cushion 3 as the seating portion. The seat back 2 being in seating position as shown in a solid line in Fig.5 is folded as shown in a chain double-dashed line and stored within the concave storage compartment 12 provided below the surface of the vehicle floor 11.

Furthermore, the seat apparatus 1 includes the link mechanism 4 for supporting the seat cushion 3 to the vehicle floor 11 and the first driving device 61 for rotating the link mechanism 4. The first driving device 61 including the motor 62 is operated by the instruction from the operation switch 9. In addition, the seat apparatus 1 also includes the angle adjustment mechanism 18 for folding the seat back 2 on the seat cushion 3 and the second driving device 68 for rotating the angle adjustment mechanism 18. The second driving device 68 rotates the angle adjustment mechanism 18 corresponding to the rotation of the link mechanism 4 while the seat apparatus 1 is moved between the stored position thereof and the seating position thereof.

Fig.5 indicates only one link mechanism 4 provided on one side of the seat apparatus 1 in the vehicle width direction; however, another link mechanism 4 is also provided at the other side of the seat apparatus 1. The first driving mechanism 61 is provided at either one of the right or left side of the seat apparatus 1 for rotating both link mechanisms 4 in conjunction with each other, at the same time, such configuration can secure the strength of the seat apparatus 1. The link mechanism 4 includes the front link 41and the rear link 42. The top end of the front link 41 is rotatably fixed to the seat cushion 3 with the rotation shaft 41a. The lower end of the front link 41 is rotatably fixed to a groove 11a formed on the vehicle floor 11 and being slightly lower than the vehicle flour 11 being normal height with the rotating shaft 41b. Thus, each front link 41 and rear link 42 are connected to the seat cushion 3 and the vehicle floor 11 with the rotation shafts, and such configuration is know as the four link mechanism. On this account, the seat apparatus 1 can be moved between the stored position thereof and the seating position thereof, where the seat cushion 3 is kept in horizontal.

The gear 65 is fixed to one front link 41 for rotating integrally. A drive from the first driving device 61 transmits to the front link 41 through the gear 65 meshing with the pinion 64 of the first driving device 61 for rotating the front link 41 relative to the seat cushion 3 so that the link mechanism 4 can be rotated.

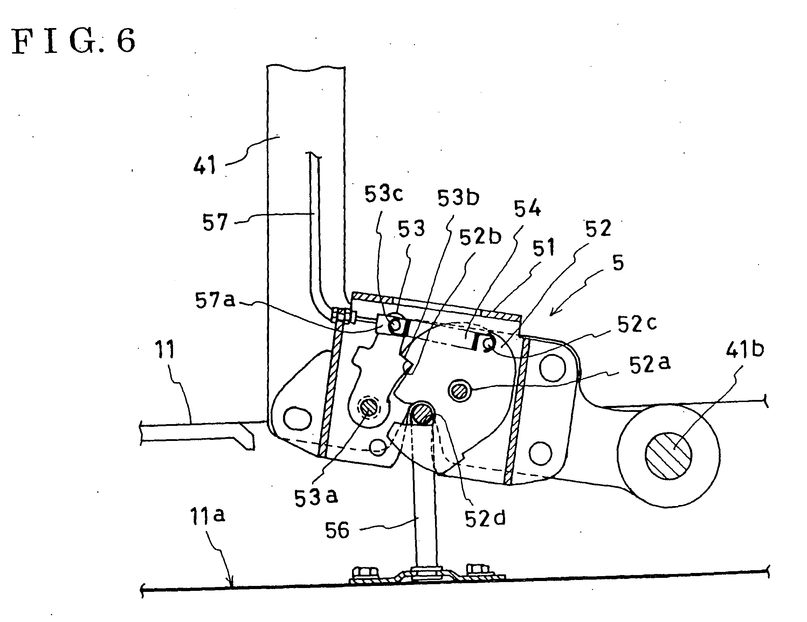

As shown in Fig.5 and Fig.6, a lock mechanism 5 is attached to the lower portion of the front link 41 being bended to fit to the vehicle floor 11. The lock mechanism 5 includes a housing 51 in which a latch 52 being rotatable relative to a shaft 52a and a pawl 53 being rotatable relative to a shaft 53a. The latch 52 includes a hook portion 52d being engagable with a striker 56 fixed to the groove 11a of the vehicle floor 11. An engaging portion 53b formed at the pawl 53 is engaged with a engaging portion 52b formed at the latch 52 as shown in Fig.6 to limit the rotation of the latch 52, as a result, the engagement between the hook portion 52d and the striker 56 is maintained so that the link mechanism 4 is fixed at the vehicle floor 11. The engagement between the latch 52 and the pawl 53 is maintained by a force of an extended spring 54 provided between a pin 52c mounted to a side surface of the latch 52 and a pin 53c mounted to a side surface of the pawl 53. A movable end 57a of an operating cable 57 is attached to the pin 53c of the pawl 53, and the other end of the operating cable 57 is attached to the housing 51. When the pin 53c of the pawl 53 is pulled against the force of the extended spring 54 by operating a lever (not shown) provided at the other end of the operating cable 57, the hook portion 52d is disengaged from the striker 56.

The seat apparatus 1 may included another driving device for folding the seat back 2, for moving the seat cushion 3 and for releasing the lock mechanism 5. Such driving device may be automatically operated by an operator using a control device such as a remote controller.

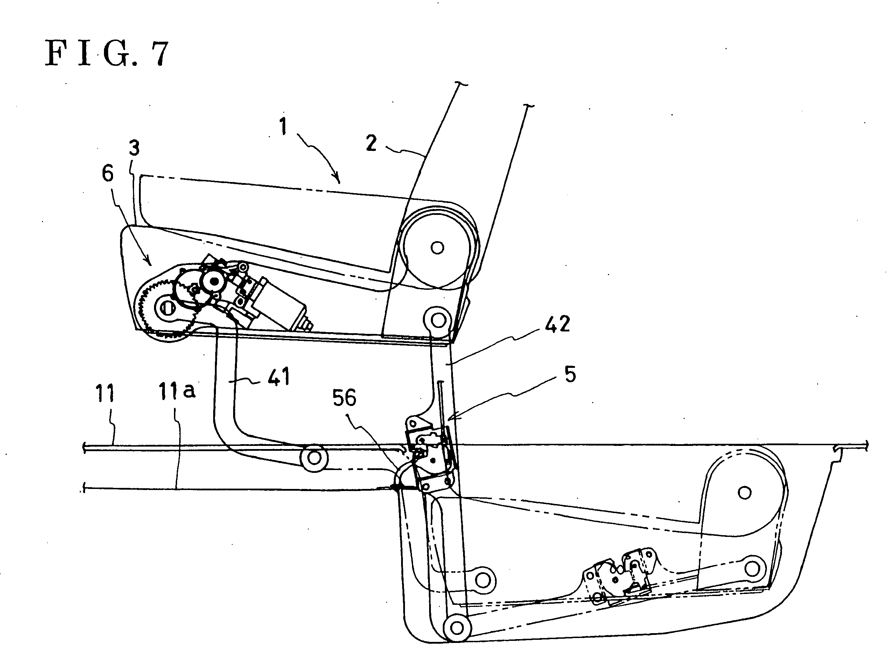

A third embodiment according to the current invention is indicated in Fig.7. The seat apparatus 1 in the third embodiment also includes the four link mechanism comprising the front link 41, the rear link 42, the seat cushion 3 and the vehicle floor 11, however, the aforementioned lock mechanism 5 is mounted on the rear link 43 for engaging with the striker 56 fixed within the groove 11a of the vehicle floor 11. Thus, the link mechanism 4 according to the third embodiment includes same structure as the link mechanism 4 according to the second embodiment, wherein at least two links are connected each other to maintain the posture of the link mechanism 4 when the seat apparatus 1 is in seating position.

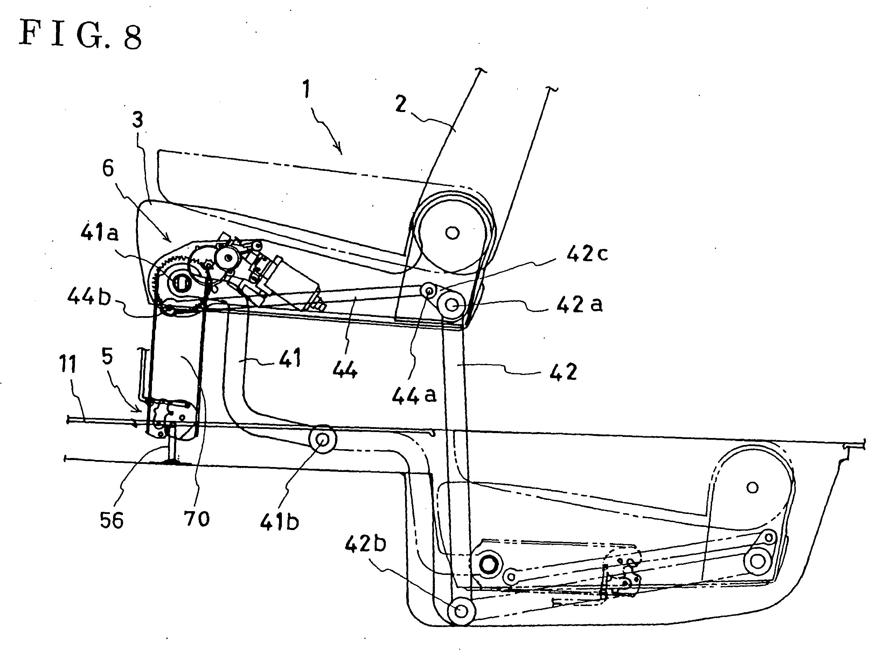

A fourth embodiment according to the current invention is shown in Fig.8. In the fourth embodiment, the rear link 42 includes a lever portion 42c being projecting upwardly from the rotation shaft 42a, and the upper end of the lever portion 42c is rotatably connected to one end of a connecting link 44 provided between the lever portion 42c and a bracket 70. On the other hand, the other end of the connecting link 44 is connected to the bracket 70. The bracket 70 is rotatably supported to the rotation shaft 41a mounted on the upper end of the front link and extending vertically downward. The bracket 70 houses the lock mechanism 5 at the lower end thereof, and such lock mechanism 5 includes the latch 52 and the pawl 53 as mentioned above, wherein the latch 52 is engagable with the striker 56 provided on the groove 11a. The seat apparatus 1 according to the fourth embodiment also includes the fourth link mechanism, and the seat cushion 3 and the vehicle floor 11 are locked by the bracket 4 fixed with the lock mechanism 5. On this account, the posture of the link mechanism 4 is maintained in seating position.

As explained in the second, third and forth embodiments, the posture of the link mechanism 4 can be maintained by locking at least two elements of the link mechanism 4 each other. The configuration of the link mechanism 4 is not limited to such embodiments, specifically, the lock mechanism 5 and the striker 56 may be provided between any elements of the link mechanism 4.

The seat apparatus 1 includes the motor 62 for moving the seat apparatus 1 between the seating position and the stored position. Specifically, the motor 62 moves the seat apparatus 1 to the seating positions shown in solid lines in Fig.5, 7 and 8, where the lock mechanism 5 is surely engaged with the vehicle floor 11. Further, an elastic stopper (not shown) may be attached, for example, between the latch and the striker to prevent clattering of the seat apparatus being seating position. In such configuration, the motor 62 rotates for outputting a drive enough to push the seat apparatus 1 to the elastic stopper and secure the engaging condition of the lock mechanism at any time.

In the second and third embodiment, the seat apparatus 1 includes the lock mechanism 5 to support the seat apparatus 1 at the seating position; however, another lock mechanism may be provided to the seat apparatus 1 for support the seat apparatus 1 at the stored position so that clattering of the stored seat can be prevented.

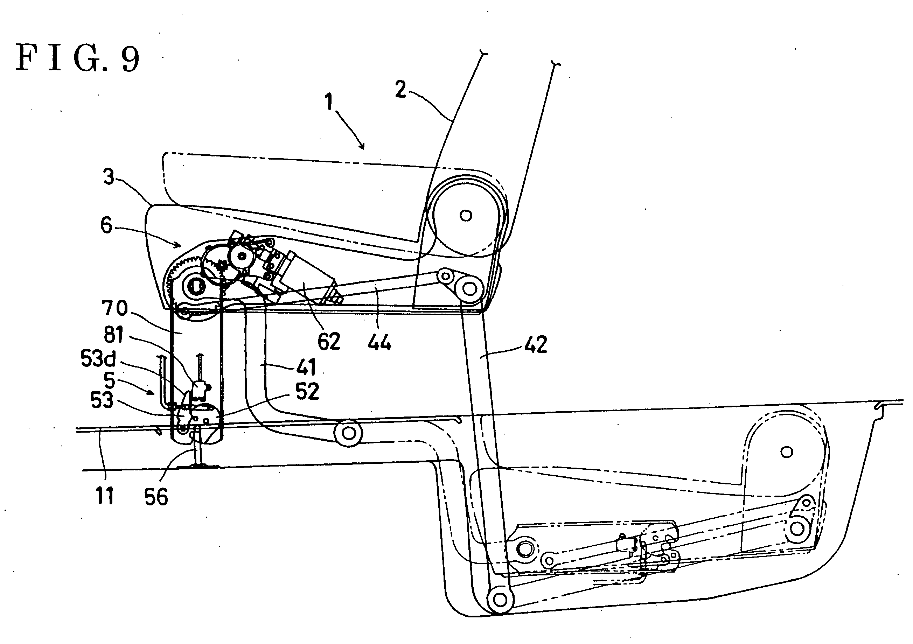

A fifth embodiment according to the seat apparatus 1 according to the current invention will be explained as follows. As shown in Fig.9, the lock mechanism 5 includes a projecting portion 53d at the pawl 53, and a detecting sensor 81 including a switch mechanism is attached to the bracket 70 to be engaged or disengaged relative to the projecting portion 53d. The detecting sensor 81 outputs an electrical "on" signal when the lock mechanism 5 is engaged with the striker 56, and the detecting sensor 81 is engaged with the projecting portion 53d. On the other hand, the sensor outputs an electrical "off" signal when the lock mechanism 5 is disengaged from the striker 56, and the detecting sensor 81 is disengaged from the projecting portion 53d.

In this way the detecting sensor 81 directly detecting the locking condition of the lock mechanism 5 assures the engaging condition of the seat apparatus 1 more firmly. Such signals from the detecting sensor 81 can be used as inputs for the control device for controlling the movement of the seat apparatus 1 automatically.

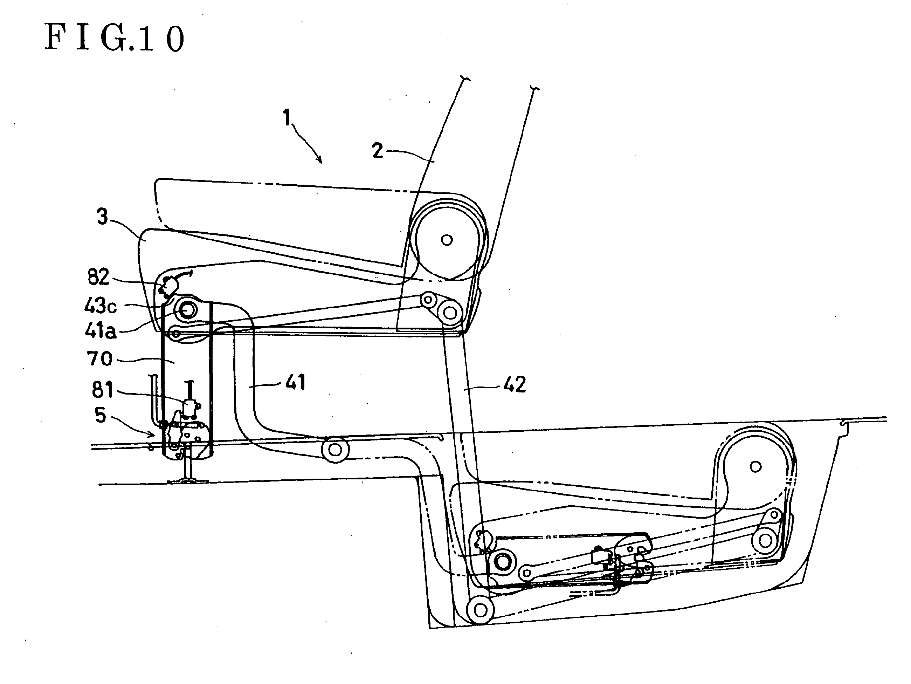

A sixth embodiment according to the seat apparatus 1 of the current invention will be explained as follows. As shown in Fig. 10, the seat apparatus 1 according to the sixth embodiment includes the aforementioned detecting sensor 81 and another detecting sensor 82 (second detecting sensor). The second detecting sensor 82 is mounted on the seat cushion 3 and being engagable with a projecting portion 43c formed at the bracket 70. The second detecting sensor 2 outputs "on" signal when the bracket 70 moves to be at a predetermined position relative to the seat cushion 3.

In such configuration, the seat apparatus 1 can be controlled to be locked more precisely by detecting the position of the seat apparatus 1 based on the "on" and "off" signal from the detecting sensor 82.

The detecting sensor 82 can be mounted to the seat apparatus 1 being manually controlled. Specifically, with the detecting sensor 82, the seat apparatus 1 can be locked at the predetermined seating position even if the seat apparatus 1 is not rotated by the motor.

## Claims

1. A seat apparatus (1) comprising a seat back (2) as a backrest portion, a seat cushion (3) as a seating portion, a link mechanism (4) for supporting the seat cushion on a vehicle floor, and a driving source (61) for actuating the link mechanism (4) to position the seat cushion (3) between a seating position and a stored position,
**characterized in that**
the link mechanism (4) is pivotally mounted on the vehicle floor for defining a posture thereof.

2. A seat apparatus (1) according to claim 1, wherein the seat apparatus (1) being retractable condition is stored within a concave storage compartment (12) provided below the the floor (11) level.

3. A seat apparatus (1) according to claims 1 and 2, wherein the seat cushion (3) is supported by a cushion side frame (31) at one side of the seat cushion (3).

4. A seat apparatus (1) according to claim 3, wherein the cushion side frames (31) includes a pair of the cushion side frames (31) provided at both sides of the seat cushion (3) and connected with a connecting pipe (32).

5. A seat apparatus (1) according to claim 1, wherein an angle adjusting mechanism (18) is provided between the seat cushion (3) and the seat back (2).

6. A seat apparatus (1) according to claim 5, wherein the angle adjusting mechanism (18) includes a planetary gear mechanism (31b).

7. A seat apparatus (1) according to claims 5 and 6, wherein the angle adjusting mechanism (18) includes a pair of the angle adjusting mechanisms (18) provided at both sides of the seat cushion (3) and connected with a connecting rod (24) for interlocking.

8. A seat apparatus (1) according to claims 5 through 7, wherein the angle adjusting mechanism (18) is actuated by a second driving source (68).

9. A seat apparatus according to claim 1, wherein the link mechanism is actuated by a first driving source.

10. A seat apparatus according to claim 1 further including a lock mechanism for fixing to the vehicle floor is provided on the link mechanism.
